# EUROPEAN PATENT APPLICATION

(11) **EP 1 715 701 A2**
(43) Date of publication of application: **25.10.2006**
(21) Application number: 06005261.0
(22) Date of filing: 15.03.2006
(51) Int. Cl.: H04Q 7/32

(54) **Portable apparatus and method for creating and managing a wireless communication network**

(30) Priority: 15.03.2005 IT MO20050061
(71) Applicant: NETWORK EXTENSIONS S.R.L., 42016 Guastalla RE (IT)
(72) Inventor: Orlandini, Luigi, 42100 Reggio Emilia (IT)
(74) Representative: Leonelli, Pietro

(57) **Abstract**

A portable apparatus for making a wireless communication network suitable for transferring signals and data between a group of movable processing and/or communication units (50) comprises processing means (2) for processing and storing said signals and data, transreceiving means (3), connected to the processing means (2) and able to exchange said signals and data with the movable units (50), and supply means (4) for supplying with electric energy at least said processing means (2) and said transreceiving means (3).

A method for making a wireless communication unit comprises activating an apparatus (1) comprising processing means (2), transreceiving means (3) connected thereto, for making a signal covering area (A) putting a set of movable processing and/or communication units (50) in wireless communication of signals and data.

## Description

The present invention relates to a portable apparatus and a method for making a wireless communication unit, in particular a wireless network for transferring signals and data through WiFi technology or radiofrequency.

Wireless communication networks so-called LAN or WLAN wireless networks are known, in which the communication, monitoring and control signals are transmitted into space and not through wires or transmission cables. In these wireless networks or systems, transmission is mainly via infrared (IR) or via radiofrequency (RF). In the latter case WiFi technology (Wireless Fidelity) is known that provides for the use of high-frequency 2.4 or 5 GHz radio waves by means of which it is possible to transmit data to a zone with an amplitude varying from 30 to 1000 m, according to environmental conditions (indoor, outdoor) and the type of antennas used (directional, omnidirectional). Currently there are three different technical standards for WiFi transmission: the IEEE 802.11b standard that operates at a frequency of 2.4 GHz and enables maximum data transmission speed of 11 Mbps, the IEEE 802.11a standard that operates at a frequency of 5 GHz and enables a maximum data transmission speed of 54 Mbps, the IEEE 802.11g standard that operates at a frequency of 2.4 GHz enables a maximum data transmission speed of 54 Mbps. WiFi technology enables wireless connection of movable or portable units, for example PDAs (Personal Digital Assistants) or handhelds PCs, notebooks, bleepers, computers, GPS, IP mobile phones and IP (Internet Protocol) videocameras.

This connection is made by Wireless Access Point, i.e. by units that within a wireless network (WLAN) act as fixed receivers/transmitters with the movable units that can communicate together. The Access Points can be used simply as transreceivers or signal repeaters and/or as interface elements between the "wireless world" and the "wired network", performing similar functions to those of a bridge or router. In this case, the Access Points enable the movable units to connect to fixed IP networks (Ethernet networks on copper, optic fibre, etc) or to the Internet without the need for connecting cables. Each Access Point acts as a network concentrator and defines a working microcell around itself.

A drawback of WiFi technology wireless networks of known type consists of the fact that they require the presence of fixed Access Points that have to be connected to the electric supply network and to the fixed IP network in addition to being wired to one or more reception and transmission antennas that are suitably positioned and fixed. Generally, such WiFi WLAN are used in equipped well-defined areas provided with the necessary infrastructures, for example in internal and external environments of airports, railway stations, cinemas, theatres, hotels, restaurants, museums, etc., or inside offices or private homes with so-called "soho" used.

Remote connection units, for example of the GPRS (General Packet Radio Services) type, are known that enable mobile phones, notebooks, and computers to have wireless connection to Internet with packet transfer speeds from 56 to 114 Kbps.

This technology enables users to interact and connect with the Internet, but does not enable local WLAN networks to be made hat are able to connect together several movable units to connect directly to a preset fixed network (LAN Ethernet), for example the intranet network of a company.

An object of the invention is to obtain a portable apparatus and a method for making a wireless communication unit that can operate independently everywhere, also in non-equipped areas and areas devoid of infrastructures, and a portable apparatus that does not require for operation either a network electrical supply or fixed transreceiving units such as Access Points or suitably located fixed antennas.

Another object is to obtain an apparatus and a method for making a WLAN communication network that enables any number of wireless movable units such as PDAs, notebooks, computers, IP mobile phones, GPS, IP videocameras that are of known type and are freely commercially available to be connected easily and rapidly.

A further object is to obtain an apparatus and a method that is able to make a wireless communication network having a signal reception area with an amplitude and shape that is variable according to the specific conditions required.

Another object is to obtain an apparatus and a method that enable connection to preset external LAN Ethernet networks and in particular to Internet.

A still further object is to obtain an apparatus and a method that enable the management of a WLAN local wireless communication network in terms of safe access and data transmission, and the connection and control of the different functions of the connected movable units.

In a first aspect of the invention, a portable apparatus is provided for making a wireless communication network suitable for transferring signals and data between a group of movable processing and/or communication units 50, characterised in that it comprises at least processing means 2 for processing and storing said signals and data, transreceiving means 3 connected to the processing means 2 and able to exchange said signals and data with the movable units 50, and supply means 4 for supplying with electric energy at least said processing means 2 and said transreceiving means 3.

Owing to this aspect of the invention, it is possible to make a wireless communication network that is able to work in areas and places that are not equipped, i.e. devoid of infrastructures such as electric network and repeating devices, fixed receivers/transmitters, for example Access Points and antennas. Non-equipped areas and places are for example road and building yards, industrial plants and industrial installations, warehouses, deposits or simply isolated and remote zones and localities such as parks, nature reserves, protected areas, mountain locations, etc.

In particular, owing to the apparatus and the method of the invention, it is possible to make a communication network zones or locations in which natural calamities have occurred such as earthquakes, floods, inundations or accidents of different types such as fires, explosions, railway disasters, and in which the infrastructures are absent or destroyed or damaged. In such circumstances, it is very important to have a communication network that enables a plurality of communication/processing units to be connected, in order to fast and effectively transmit the informations, and simultaneously to coordinate and facilitate all the rescue and aid operations such as civil defence, firemen, police, army.

In a second aspect of the invention a method is provided for making a wireless communication unit characterised in that it activates an apparatus 1 comprising at least processing means 2 and transreceiving means 3 connected thereto for making a signal covering area A and to put in wireless communication a set of movable signals and date processing and/or communication units 50.

The invention can be better understood and actuated with reference to the attached drawings that illustrate an embodiment thereof by way of non-limitative example, in which:
Figure 1 is a schematic block view of a portable apparatus for making a wireless communication network according to the invention;
Figure 2 is a perspective view of the apparatus in Figure 1 comprising containing means;
Figure 3 is a partial perspective view of the apparatus in Figure 2 in which some parts have been removed to better show others thereof;
Figure 4 is a schematic block view of the apparatus in Figure 1 in connection with a local wired communication network and a remote communication network;
Figure 5 is a schematic view of an extended communication network made by a plurality of apparatuses of Figure 1;
Figure 6 is a schematic block view of a version of the apparatus in Figure 1;
Figure 7 is a flow diagram of a method for making a wireless communication unit according to the invention;
Figure 8 is a flow diagram of a version of the method in Figure 7.

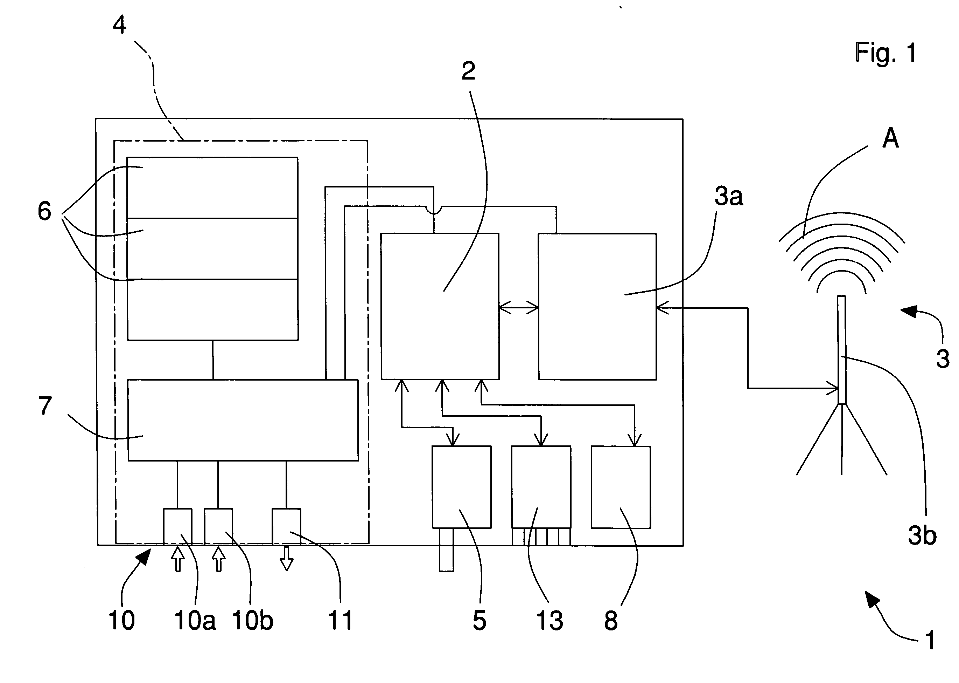

With reference to Figures 1 to 5, 1 indicates the portable apparatus according to the invention for creating and managing a wireless communication network, suitable for transferring signals and data between a group of movable processing and/or communication units 50.

The apparatus 1 substantially comprises processing means 2, able to process and memorise signals and data, transreceiving means 3 connected with said processing means 2 and intended to exchange signals and data with the movable units 50, and supply means 4, which provide to the processing means 2 and to the transreceiving means 3 the electric energy necessary for operation. The processing means 2 and the transreceiving means are thus able to create a signal covering area A and to put in wireless communication the movable processing and/or communication units 50 that can automatically "hook" said signal covering area A. In particular, the movable units 50 are commercial devices and apparatuses of known type such as, for example, portable computers or notebooks 51, handhelds computers or PDAs 52, IP mobile phones 53, videocameras IP 54, provided with suitable integrated radio transreceiver cards.

The processing means 2 consists, for example, of an industrial computer of known type, that is able to operate in extreme environmental conditions and to withstand great mechanical stress such as vibrations, impacts, temperature jumps etc. The processing means 2 comprises processor means, i.e. a processing CPU that is able to process and store data, suitable interface means for inserting data, for example a keyboard with mouse, and displaying means for showing said data and informations, for example a LCD monitor or screen.

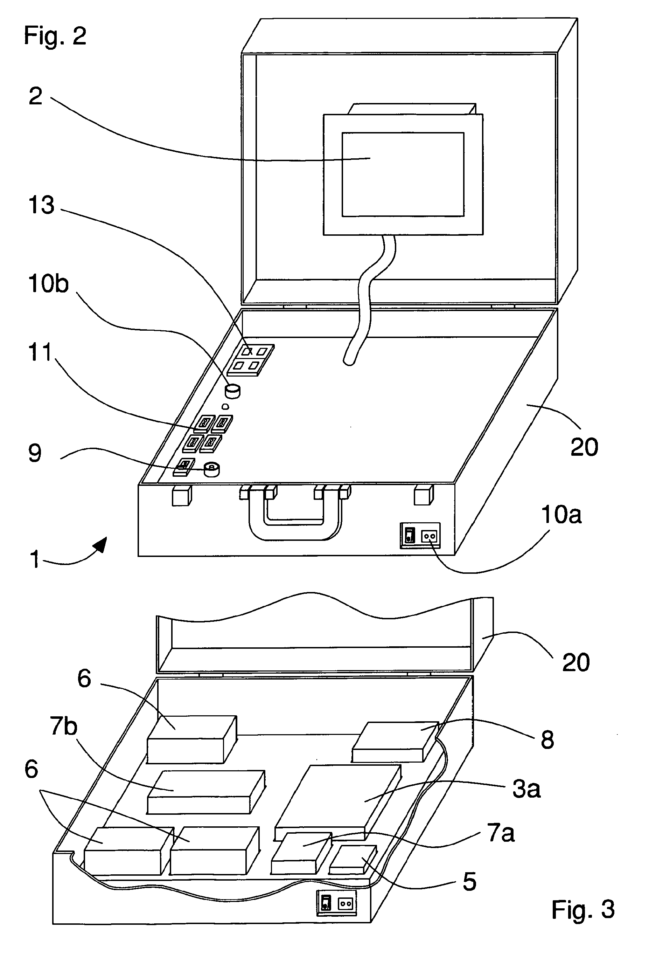

As illustrated in the embodiment in Figure 2, the processing means 2 may consist of a "panel PC" provided with a touchscreen, i.e. an industrial computer with a screen that is sensitive to the touch of fingers and is therefore devoid of a keyboard and mouse. It is also provided for the processing means 2 to comprise only processor means and interface, the screen being an optional external device with which the processing means 2 can if necessary be connected.

The computer can function with any commercially available operating system but the Linux operating system is preferably used. Such operating system has stable operation, is very flexible in network management and provides high performance also in poor hardware situations from the point of view of the graphic interface.

The transreceiving means 3 comprises at least a high-frequency radio-wave transreceiver 3a working on high-frequency radio waves and more specifically operating with WiFi technology conforming to IEEE 802.11 standards. Substantially, the high-frequency radio-wave transreceiver 3a is an Access Point of commercial type that is able to operate according to international technical standards IEEE 802.11a, 802.11b and 802.11g that govern WiFi transmission.

The movable units 50 are commercial devices that integrate WiFi transreceiver cards with the IEEE standard of the high-frequency radio-wave transreceiver 3a.

The transreceiving means 3 furthermore comprises antenna means 3b, comprising, for example, a high-gain antenna mounted on a support tripod and connected to the high-frequency radio-wave transreceiver 3a by means of a very low-impedance connecting cable inserted into a suitable insertion antenna 9 of the apparatus 1. The antenna 3b may be of the directional or omnidirectional type, depending on specific operating needs.

The signal covering area A depends on the maximum power of the antenna means 3b, the value of which is set by local laws. In Italy and Europe the power allowed to the antennas enables them to have an outdoor signal covering area with an extension having a radius varying from 500 to 1000 m.

The apparatus 1 comprises remote connecting means 5 that enables the processing means 2 and consequently all the movable units 50 that can exploit the connection, to be connected to a network or a remote system, in particular to the Internet network. The remote connecting means 5 may consist of an analogical or digital ISDN or ADSL modem and/or of a GPRS modem.

The supply means 4 comprises storage means 6, consisting, for example, of a plurality of 12V batteries that are parallel-connected to ensure the electric supply to the apparatus 1 even if there is no external electric supply. The batteries are suitably selected to ensure long running time to the apparatus 1 and to supply possible external services or devices by means of one or more suitable electric output sockets 11.

The supply means 4 also includes one or more electric supply inlet sockets 10 that enable the apparatus 1 to be connected to external supply sources, for example the public electric network, continuity units, generator sets, vehicle batteries, etc.

The supply means 4 is provided with converting means 7 that is connectable to an external electric supply and is able to provide electric energy to the processing means 2, to the transreceiving means 3 and to the storage means 6.

In the embodiment illustrated in Figures 2 and 3, the converting means 7 comprises a feeder 7a 110-250 V functioning with alternating voltage, of known type, that supplies direct current to some components of the apparatus 1, for example the processing means 2 and the remote connecting means 5, and enables the storage means 6 to be recharged through a suitable current stabiliser. The feeder 7a is supplied through an alternating current input 10a.

An AC/DC converter or inverter 7b is also provided that is supplied with direct voltage and supplies a preset alternative voltage current in alternating voltage, for example 220V, to supply components of the apparatus 1, for example the transreceiving means 3, and the electric output sockets 11. In this way, the apparatus 1 can act as an UPS continuity unit and provides a continuous and constant electricity supply to external apparatuses and devices.

The converter 7b can be supplied by the storage means 6, or by an external supply, by means of a direct current input socket 10b.

Obviously, the type and arrangement of the electric supply components and the diagram of the corresponding electrical system may vary without thereby falling outside the scope of protection of the invention.

It is, for example, possible that the converter 7b is supplied by the storage means 6, and in turn supplies the current output sockets 11 and all the internal components of the apparatus 1, directly or through suitable feeders/transformers. The storage means 6 is, in this case, charged by 10-250 V AC, or 12V DC feeders.

The apparatus comprises sensor means 8 connected to the processing means 2 and able to measure one or more physical environmental parameters, for example temperature, pressure, humidity of the external environment.

Multiple connecting means 13 is furthermore provided that enable the processing means 2 to be connected by means of cables or wires to a plurality of processing and/or external communication units, for example portable computers, printers, fax machines, etc.. The multiple connecting means 13 substantially consists of one or more hub or switch-hub unit of known type provided with a plurality of serial, parallel or USB ports.

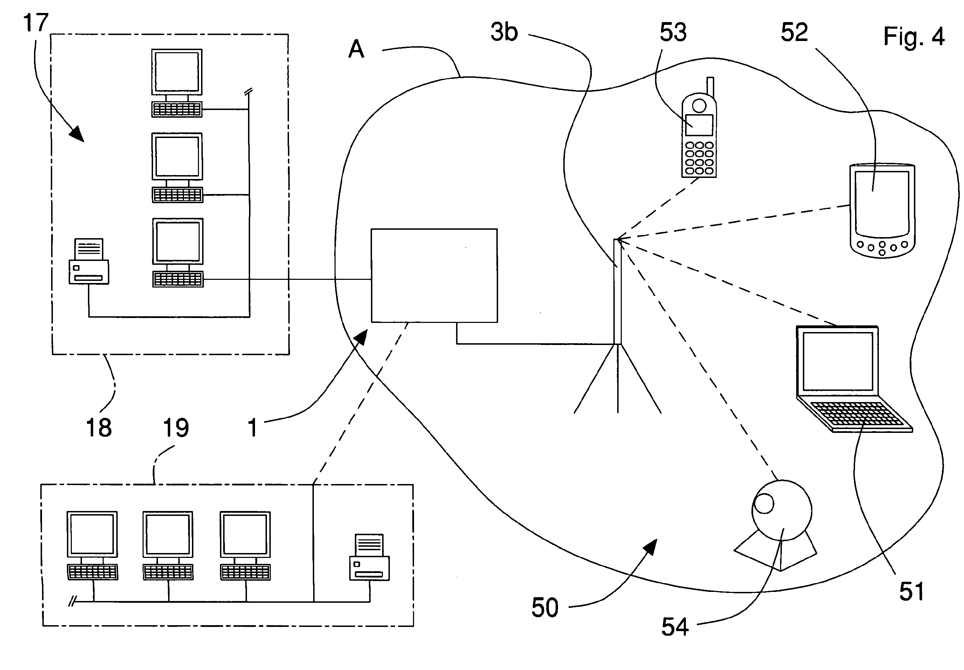

It should be observed that the apparatus 1 of the invention, as illustrated schematically in Figure 4, enables a wireless communication network to be created that is able to connect together a plurality of movable units 50 present inside the signal covering area A, and also to connect a plurality of movable units 50 to a local wired communication network 18, for example a LAN Ethernet network consisting of a set of computers and printers 17, and/or to a remote communication network 19, for example the Internet network or the internal network (intranet) of a remote information system.

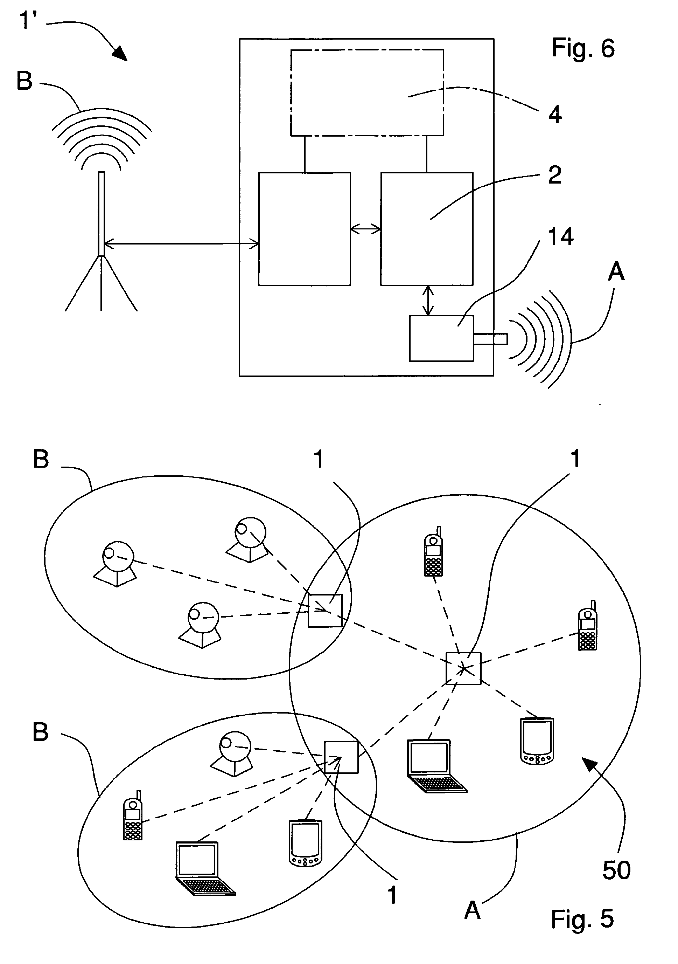

It is provided for that the apparatus 1 may also include wireless connection means 14 suitable for receiving and transmitting signals and data inside a pre-existing wireless communication network. This wireless connection means 14 substantially consists of a WiFi radio connection card 14 of commercial type by means of which the processing means 2 is able to "hook" or connect to a signal covering area A of the signal made by another apparatus 1. This latter apparatus acts as a main apparatus whereas the remaining apparatus that "hooks" and carries out the radio relaunch acts as an additional apparatus or signal repeater. Definitively, as illustrated in Figure 5, the repeater apparatus creates an additional signal covering area B that prolongs the main signal covering area A and has the sole task of redirecting the signals of the movable units 50 presents in the signal covering area B of the repeater apparatus to the main apparatus 1, that manages and controls such units.

In Figure 5 a simplified version 1' of the apparatus 1 is shown, substantially comprising the processing means 2, the transreceiving means 3, the electric supply means 4 and the wireless interconnection means 14. The version 1' in question comprises only the means necessary to perform the function of additional signal-repeating apparatus, thus presenting less functionality but at the same time less energy consumption and less costs.

It is important to underline that the combination of more apparatuses 1 or of an apparatus 1 and one or more additional apparatuses 1' enables, also depending on the features of the omnidirectional or directional antenna means 3b a total signal cover area to be obtained that is composed of areas A and B, having an extension and distribution that are variable according to specific needs.

As shown in Figures 2 and 3, the apparatus is provided with containing means 20 that is able to house and contain the various components of said apparatus, i.e. the processing means 2, the transreceiving means 3, the supply means 4, the sensor means 8, the remote connecting means 5 and the multiple connecting means 13. Said containing means 20 substantially consists of a stiff case of commercial type, made of plastic and/or metal material and characterised by high mechanical and chemical resistance, in particular resistant to impacts, to corrosive substances and to the penetration of solid particles (dust) and of liquids (water), with an IP67 protection grade. Within the containing means 20 are present a plurality of seats obtained in a rubber/sponge shock-absorbing material 21 and intended to house the various components of the apparatus 1.

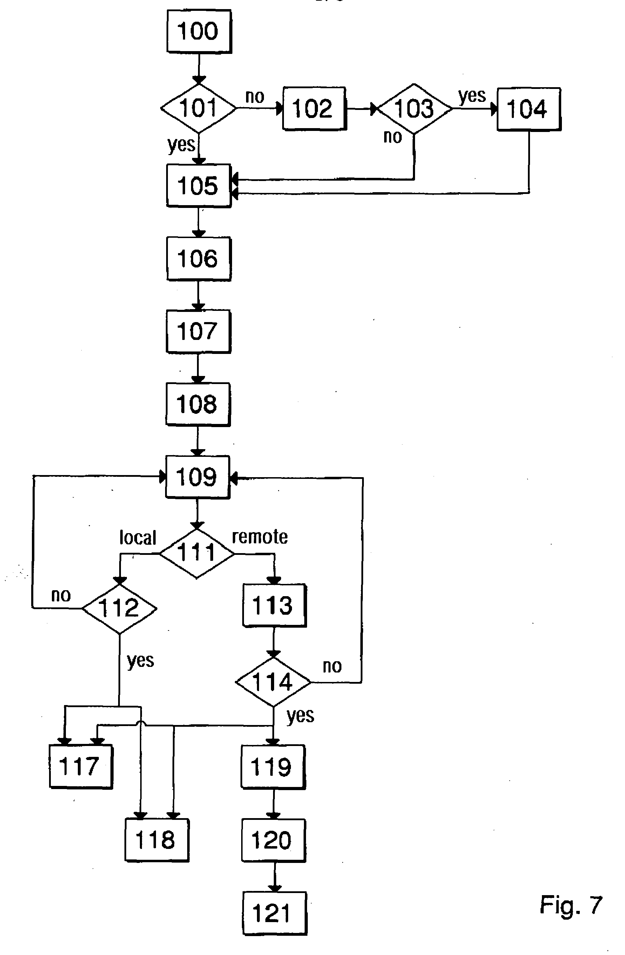

The method for making a wireless communication unit of the invention is illustrated in the flow diagram in Figure 7. The diagram illustrates in detail the operating sequence divided into phases or steps that leads to the creation of a wireless communication network that is able to connect a set of movable processing and/or communication units 50 in wireless communication.

At the initial step 100 activating an apparatus 1 comprising processing means 2, transreceiving means 3 connected thereto, and supply means 4, is provided for in order to create at the step 105 a signal covering area A and thus putting in communication, at the step 108, a set of movable processing and/or communication units 50 that are present in said area A.

Said putting in wireless communication comprises receiving and transmitting signals and data through high-frequency radio waves, in particular through WiFi technology, in conformity to international IEEE 802.11x technical standards (IEEE 802.11a, 802.11b and 802.11g).

Activating the apparatus 1 means supplying the processing means 2 and the transreceiving means 3 with electric energy by means of the supply means 4.

At the step 106 activating the set of movable units 50 is provided for, and subsequently at the step 107 it is provided for that each movable unit 50 automatically detects and hooks up to the signal covering area A, created by the transreceiving means 3, and consequently connects to the processing means 2. Through the latter it is furthermore possible to connect the movable units 50 to each others, creating an integrated processing and communicating system. Activating the movable units 50 can be remotely achieved through the processing means 2.

After activating the apparatus 1, at the step 101, if requested, configuring the processing means 2 is provided, setting at the step 102 the configuring parameters of the movable units 50. If required at the step 103, "launching" the processing means 2 is provided, i.e. making the processing means 2 to run at step 104, one or more preset software programmes for managing and controlling the movable units 50. Said programmes enable the movable units, for example IP videocameras, to be controlled directly, or enable the operation thereof to be managed, for example in the case of IP mobile phones, which in the specific case require a control programme (Voice-on-IP).

After the set of movable units 50 has been connected, at the step 109 the user is asked to input the access parameters (Login and Password) to access the functions of the apparatus 1, and in particular use the processing means 2 by entering the operating system and the communication network. At step 111 it is possible to choose between a local connection for connecting with other movable units 50 and/or to wired communication networks 18, or a remote connection for connecting to a remote network 19.

Inputting the correct access parameters authorises the user to access the operating system and the communication network with a preset user profile, i.e. with settings that permit certain functions and operations and inhibit others. The use of user authorisations and profiles is a well-known and consolidated procedure that is applicable in most operating systems and communication networks that are currently available. In the specific case, the method provides for the user authorisation test being able to be run in local or remote mode. The local mode test, at the step 112, is run by the processing means 2 of the apparatus 1. The remote test is run at the step 114 by a remote authorisation system, for example the computer operating system, or by a remote server. In this case, before the step 113, the processing means 2 is connected to said remote system through suitable remote connecting means 5. In addition to the remote connection, the remote test also authorises the local connection .

If the user authorisation is not valid, access to the operating system and to the communication network is denied. If the authorisation is valid, it is possible for the user to connect the movable units 50, through the processing means 2, to one or more processing and/or independent external communication unit 17 at the step 117, or to interconnected through a local wired communication network 18, at the step 118. If the authorisation is tested in remote mode; at the step 119 there is also provided for connecting the movable units 50 to a remote communication network 19, for example a company intranet network and for activating a VPN (Virtual Private Network) for accessing and using a remote information network, at the step 121.

The security of the transmission and of the connection can be assured by a data encryption system like tunnelling.

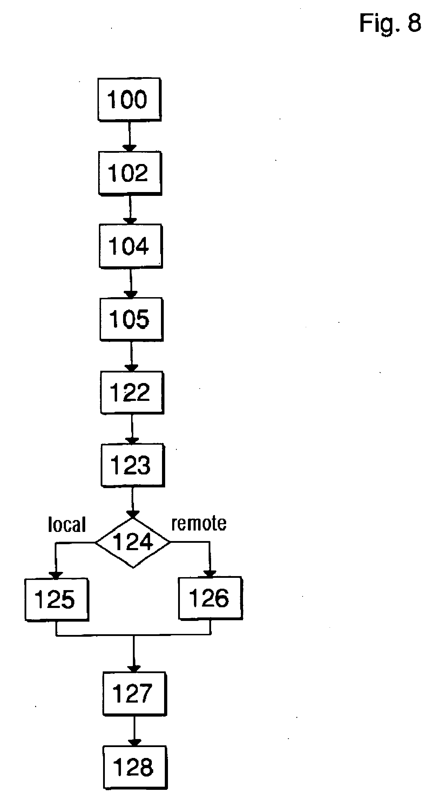

Figure 8 illustrates a version of the method of creating a wireless network that is particularly appropriate in the case of movable units consisting of IP telecameras or videocameras.

At the initial the step 100 activating the apparatus 1 and configuring the processing means 2 is provided, by inserting into the specific case at the step 102 the "mac_address" of the telecameras 54 that is it intended to use. Subsequently, at the step 104 a software control programme for controlling the telecameras 54 is run on the processing means 2.

After positioning, at the step 122, the telecameras 54 within the signal covering area A activated at step 105, starting up said telecameras is provided for at the step 123, through the running control programme.

The method enables at the step 124 to decide whether to run local or remote monitoring with the telecameras.

In the case of local monitoring, at the step 125, said telecameras 54 are connected to the movable units connected by the local wireless network, for example computer 51 or PDA 52. In the case of remote monitoring, at the step 126 it is possible to connect the telecameras 54 to one or more remote control systems, for example a remote computer or server.

In both cases, through the movable local units 51, 52 or the remote control system it is possible to run at the step 127 video surveillance of the entire signal covering area A, not only acquiring video and audio signals, but also controlling directly the telecameras 54, managing for example the orientation and focussing thereof, according to the PTZ standard, and/or controlling the activation and transmission thereof.

Each telecamera 54 can be inserted into a suitable sealed container that can also contain a wireless transreceiving device, one or more supply batteries with corresponding recharging means that can be connected to a fixed electric network or to solar-energy panels. The telecamera can also be provided with environmental sensors that detect and measure environment parameters the values of which can be sent, as indicated at the step 128, to the movable units 51, 52 or to the remote control system.

It is important to observe that it is possible to use an IP wireless videocamera for interior or exterior use, provided that it works with WiFi technology satisfying th IEEE transmission standards required by the apparatus 1.

The portable apparatus and the method for making a wireless communication unit according to the invention advantageously enable use in situations of infrastructural precariousness where a signal covering area is necessary with all the services that it can make available.

Some examples of non-limitative application in which the apparatus and the method are particularly useful are:
- fairs, exhibitions and events in general on the occasion of which the management of hot spot wireless (Access Points) is provided for providing participants with Internet connections;
- yards in which are important the remote use of applicational programmes, the detection of the presence of workers, recording activities and consumption of materials, site warehouse management, video surveillance, etc.;
- military fields in which are important the remote use of applicational programmes, the management of the field warehouse, video surveillance, cartographic systems with integration of movable GPS units;
- campsites in which the management of hot spot wireless is useful for providing the users of the facility with access to the Internet;
- open-air sporting competitions in which the remote use of applications is required for collecting information, times, placings and data transmission via Internet;
- provisional civil-defence facilities on the occasion of critical environmental situations, on the occasion of which are necessary the remote use of applications, the management of the field warehouse, video surveillance, cartographic systems with integration of movable GPS units;
- disaster recovery WAN (Wide Area Network) global lines or networks and on LAN networks for remote sites of companies;
- field tests of industrial company products for which the remote use applicational programmes is necessary for gathering information and product operating parameters, the transmission of data via Internet, the gathering and transmission of images;
- provisional covering of a wireless signal with connection to the company applicational system on the occasion of particular events, for example warehouse stocktaking;
- gathering industrial production data in a remote location with respect to the company data-processing centre.

### Legend

- 1: portable apparatus
- 2: processing means
- 3: transreceiving means
- 4: supply means
- 5: remote connecting means
- 6: storage means
- 7: converting means
- 8: sensor means
- 9: antenna connection fitting
- 10: electric power supply input sockets
- 11: electric power supply outlet sockets
- 13: multiple connecting means
- 14: wireless interconnection means
- 17: processing and/or external communication units
- 18: local wired communication network
- 19: remote communication network
- 20: containing means
- 21: shockproof material
- 50: movable processing and/or communication units
- 51: notebook / portable computer
- 52: PDA / handheld computer
- 53: IP mobile phone
- 54: IP telecamera or videocamera

### Flow diagrams legend

- **100**: **Activating apparatus 1**
- 101: Apparatus configured?
- 102: Configuring apparatus 1 (processing means 2)
- 103: Run control programme of movable unit 50?
- 104: Control programme launch
- 105: Activating signal covering area A
- 106: Activating movable unit 50
- 107: Automatic detecting of signal covering area A
- 108: Automatic connection of movable unit to the apparatus 1
- 109: Inserting user of the access parameters into the system (login and password)
- 111: Local or remote connection?
- 112: Access parameters correct for local connection?
- 113: Activating remote connecting means 5
- 114: Access parameters correct for remote connection?
- 117: Connection to movable units that are current in the signal covering area A
- 118: Connection to local wired network
- 119: Connecting to remote network (Internet)
- 120: Activating connection to remote system (VPN)
- 121: Using remote information system
- 122: Positioning movable unit inside the signal covering area A
- 123: Activating movable unit through apparatus 1 programme
- 124: Local or remote monitoring
- 125: Connecting movable unit to other movable processing units
- 126: Connecting to remote control system
- 127: Control and monitoring
- 128: Reading of physical parameter data by sensor means

## Claims

1. Portable apparatus for making a wireless communication network suitable for transferring signals and data between a group of movable processing and/or communication units (50), **characterised in that** it comprises at least processing means (2) for processing and storing said signals and data, transreceiving means (3), connected to the processing means (2) and able to exchange said signals and data with the movable units (50), and supply means (4) to supply at least said processing means (2) and said transreceiving means (3) with electric energy.

2. Apparatus according to claim 1, wherein the transreceiving means (3) comprises at least a high-frequency radio-wave transreceiver (3a).

3. Apparatus according to claim 2 wherein said at least a high-frequency radio-wave transreceiver (3a) operates with WiFi technology conforming to IEEE 802.11 standards.

4. Apparatus according to claim 1, wherein the transreceiving means (3) comprises antenna means (3b).

5. Apparatus according to claim 1, comprising remote connecting means (5) for connecting the processing means (2) to at least a remote network or system (19).

6. Apparatus according to claim 5, wherein the remote connecting means (5) comprises at least one chosen among analogical modem, ISDN, ADSL, GPRS.

7. Apparatus according to claim 1 wherein the supply means (4) comprises storage means (6) for storing electric energy.

8. Apparatus according to claim 7, wherein the supply means (4) comprises converting means (7) that is connectable to an external electric supply and is able to supply electric energy at least to the processing means (2), to the transreceiving means (3) and to the storage means (6).

9. Apparatus according to claim 8, wherein the supply means (4) comprises at least an electric supply input (10) connected to the converting means (7).

10. Apparatus according to claim 1, wherein the supply means (4) comprises at least an outlet socket (11) for supplying electric supply.

11. Apparatus according to claim 1, comprising sensor means (8) connected to the processing means (2) for measuring one of a plurality of physical environmental parameters comprising at least temperature, pressure, humidity.

12. Apparatus according to claim 1, comprising multiple connecting means (13) for connecting the processing means (2) to a set of processing and/or external communication units (17).

13. Apparatus according to claim 1, comprising wireless connection means (14) connected to the processing means (2) and suitable for receiving and transmitting signals and data inside a pre-existing wireless communication network.

14. Apparatus according to claim 13, wherein said wireless connection means (14) comprises at least a WiFi transreceiving card.

15. Apparatus according to claim 1, wherein the processing means (2) comprises at least processor means for processing and storing data, and interface means for inserting data.

16. Apparatus according to claim 1, comprising containing means (20) that is able to house and contain at least the processing means (2), the transreceiving means (3), the supply means (4).

17. Apparatus according to claim 16, wherein said containing means (20) is made of material with high mechanical and chemical resistance.

18. Apparatus according to claim 16, wherein said containing means (20) is hermetically closable.

19. Method for making a wireless communication unit, **characterised in that** an apparatus (1) is activated comprising at least processing means (2), transreceiving means (3) connected thereto, for making a signal covering area (A) and for putting a set of movable processing and/or communication units (50) in wireless signal and data communication.

20. Method according to claim 19, wherein said putting in communication comprises for each movable unit (50) automatically detecting said signal covering area (A).

21. Method according to claim 19, wherein said putting in communication comprises connecting said movable units (50) to the processing means (2) through the transreceiving means (3).

22. Method according to claim 21, wherein said putting in communication comprises reciprocally connecting said movable units (50) through the processing means (2).

23. Method according to claim 21, further comprising connecting the set of the movable units (50) to at least an external processing and/or communication unit (17) or to a local wired communication network (18).

24. Method according to claim 21, further comprising connecting the set of the movable units (50) to at least a remote communication network (19), through remote connecting means (5) connected to the processing means (2).

25. Method according to claim 19, comprising checking access parameters of a user for allowing the latter to use the apparatus (1).

26. Method according to claims 21 to 25, comprising after said checking access parameters, selecting a local connection for connecting to other movable units (50), and/or to wired communication networks (18) or a remote connection for connecting to at least a remote network (19).

27. Method according to claim 21, comprising after said connecting the movable unit (50) to processing means (2), activating and controlling said movable unit (50) through said processing means (2).

28. Method according to claim 19, comprising configuring the processing means (2) with configuring parameters of movable units (50).

29. Method according to claim 19, comprising making the processing means (2) run at least a preset software programme for managing and controlling the movable units (50).

30. Method according to claim 19, wherein said putting in wireless communication comprises receiving and transmitting signals and data through high-frequency radio waves.

31. Method according to claim 30, wherein said receiving and transmitting occurs through WiFi technology conforming to IEEE 802.11 technical standards.

32. Method according to claim 19, wherein said activating the apparatus (1) comprises supplying with electric energy the processing means (2) and the transreceiving means (3) through supply means (4).
